(19) Europäisches Patentamt
European Patent Office
Office européen des brevets

(11) **EP 4 459 348 A1**

(12) **EUROPEAN PATENT APPLICATION**

(43) Date of publication:
**06.11.2024 Bulletin 2024/45**

(51) International Patent Classification (IPC):
**G02B 7/00** (2021.01) **G02B 21/00** (2006.01)
**G01N 21/64** (2006.01)

(21) Application number: **23171056.7**

(52) Cooperative Patent Classification (CPC):
**G02B 21/26; G02B 7/005; G02B 21/00;**
G01N 21/6458

(22) Date of filing: **02.05.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Leica Microsystems CMS GmbH 35578 Wetzlar (DE)**

(72) Inventor: **Kubek, Martin 35578 Wetzlar (DE)**

(74) Representative: **Schaumburg und Partner Patentanwälte mbB Mauerkircherstraße 31 81679 München (DE)**

(54) **LINEAR DRIVE FOR MOVING A FUNCTIONAL UNIT OF A MICROSCOPE AND MICROSCOPE**

(57) A linear drive (300) for moving a functional unit (302) of a microscope (1400) comprises a first moveable member (102) that is rotatable about an axis of rotation (O) and fixed with respect to linear movement along the axis of rotation (O), and a second moveable member (104) that is connected to the functional unit (302), fixed against rotation about the axis of rotation (O) and moveable along the axis of rotation (O). The linear drive (300) further comprises a spacing member (110a) engaged with the first moveable member (102) at a first point (112a) and the second moveable member (104) at a second point (114a), and configured to maintain a constant spacing between the first point (112a) of the first moveable member (102) and the second point (114a) of the second moveable member (104).

FIG. 3

EP 4 459 348 A1

**Description**

Technical field

The invention relates to a linear drive for moving a functional unit of a microscope. The invention further relates to a microscope.

Background

In the art, linear drives are used in microscopes to move a functional unit of the microscope, for example a microscope stage or a nosepiece. If the direction of the linear movement facilitated by the linear drive is parallel to an optical axis of the microscope, such a linear drive is also called a z-drive. Typically, the linear drive comprises a slide that is mounted in a linear bearing and that carries the functional unit of the microscope. Typically, a motor and spindle combination, a rack and pinion, an excentre or a piezo element are used to move the slide.

If a spindle drive is used to move the slide in the sub-$\mu$m range, the spindle pitch has to be very small. The small spindle pitch however means that moving the slide over a long distance takes a long time and leads to unwanted noise emissions. Further, the contact surfaces between the spindle and the spindle nut must be designed to be wear-resistant, either by means of selecting suitable surface materials, by providing lubricants and/or suitable rolling bearings. The surface pressure between the elements must be designed with regard to the moved loads so that wear does not occur during the expected lifetime of the drive. Linear drives comprising gears have the same drawbacks. Piezo elements have the advantage of being resistant to wear but provide only a small stroke of approximately 1 mm. Piezo-motors, for example ultrasonic motors, achieve high accuracy and speed over long distances, but these drives are not wear-resistant and can only carry small loads, since force transmission is realized by means of a frictional connection.

Summary

It is an object to provide a linear drive for moving a functional unit of a microscope that has a high accuracy and is able to carry a high load.

The aforementioned object is achieved by the subject-matter of the independent claim. Advantageous embodiments are defined in the dependent claims and the following description.

The proposed linear drive for moving a functional unit of a microscope comprises a first moveable member that is rotatable about an axis of rotation and fixed with respect to linear movement along the axis of rotation, and a second moveable member that is connected to the functional unit, fixed against rotation about the axis of rotation and moveable along the axis of rotation. The linear drive further comprises a spacing member engaged with the first moveable member at a first point and the second moveable member at a second point, and configured to maintain a constant spacing between the first point of the first moveable member and the second point of the second moveable member. The first point may be arranged at a first distance from the axis of rotation and the second point may be arranged at a second distance from the axis of rotation. Preferably, the first point and the second point are arranged at the same distance from the axis of rotation.

The linear drive converts a rotation of the first moveable member about the axis of rotation into a linear motion of the second moveable member, and thus the functional unit, along the axis of rotation. This conversion of rotary motion into linear motion is based on the simple principle of positive locking. The spacing member defines a line of fixed length between the first point arranged on the first moveable member, and the second point arranged on the second moveable member. Thus, the distance between the first moveable member and the second moveable member is determined by the arrangement of this line. Without loss of generality, it can be assumed that the first point and the second point are arranged at the same distance from the axis of rotation. When the distance between the two moveable members is maximal, the first point and the second point are arranged atop of each other seen along the axis of rotation. In other words: When the distance between the two moveable members is maximal, the line connecting the two points is parallel to the axis of rotation. When the first moveable member is rotated, the first point is rotated around the axis of rotation. Since the distance between the two points is fixed and the second point can only move parallel to the axis of rotation, the line connecting the two points tilts with respect to the axis of rotation. This tilting reduces the distance between the two moveable members. Likewise, by rotating the first moveable member in the opposite direction, the distance between the two moveable members can be increased until the line connecting the two points is again parallel to the axis of rotation, i.e. the maximum distance between the two moveable members is achieved. The moving elements of the linear drive interact based on the principle of positive locking and the distance between the two moveable members is determined solely by geometric principles. Thus, the distance between the two moveable members, and therefore the position of the functional unit, can be adjusted very precisely and reproducible. In particular, the distance between two end points of a movement of the second moveable member remains constant over a large number of movements. In an example where the functional unit includes a microscope objective, this means that the focus of the microscope can be precisely and predictably adjusted over a large number of focus adjustments. The load carrying capacity of the linear drive is essentially determined by the mechanical properties of the distancing member. Thus, even heavy loads, such as a microscope nosepiece or a microscope stage, may be moved by the linear drive. Further, the geometric arrangement of the moving elements of the linear drive makes the linear drive very stable.

In a preferred embodiment, the linear drive comprises a rotary drive configured to rotate the first moveable member. The rotary drive may comprise a motor, in particular a stepper motor, a DC motor or an ultrasonic motor. The motor may comprise an encoder. In this embodiment, the movement of the second moveable member, and therefore the functional unit, is motorized by the rotary drive. Thereby, the positioning of the functional unit may be automated. Alternatively or additionally, the first moveable member may be arranged and configured to be rotated manually. In such an embodiment, the first moveable member may be self-locking and/or comprise a break.

In another preferred embodiment, the linear drive comprises a controller for controlling the rotary drive configured to receive a user input corresponding to a distance, and to control the rotary drive to rotate the first moveable member such that the second moveable member is moved the distance corresponding to the user input. The height h, i.e. the distance between the first point and the second point along the axis of rotation, is determined solely by geometric principles:

$$h = \sqrt{h_0^2 - r_1^2 - r_2^2 + 2 r_1 r_2 \cos \varphi}$$

Wherein $h_0$ is the distance between the two points, $r_1$ is the distance of the first point from the axis of rotation, $r_2$ is the distance of the second point from the axis of rotation, and $\varphi$ is the angle of rotation of the first moveable member relative to the position in which the height is maximal. The controller determines the correct angle of rotation for a given distance input by the user, for example by computing it or by reading it from a precomputed table stored in a memory of the controller, and controls the rotary drive to rotate by the determined amount. By automating the control of the rotary drive, very precise positioning of the functional unit may be achieved. Additionally, a sensor element may be provided that is configured to provide position data corresponding to the current position of the second moveable member to the controller. Based on the position data, a closed-loop control of the position of the second moveable member may be realized, allowing for an even more precise positioning of the functional unit.

In another preferred embodiment, the linear drive comprises a transmission arranged between the rotary drive and the first moveable member, in particular a belt transmission and/or a gear transmission. The transmission is preferably a reducing transmission. By reducing the rotational movement of the rotary drive before it is applied to the first moveable member, the smallest angle by which the element is rotated at least can be reduced. This in turn allows for a much finer adjustment of the position of the second moveable member, and therefore the functional unit. Preferably, the linear drive comprises no transmission arranged between the rotary drive and the first moveable member. By providing no transmission, wear is reduced making the movement of the second moveable member, and thus the positioning of the functional unit, more reproducible.

In another preferred embodiment, the linear drive comprises a biasing member configured to bias the second moveable member towards the first moveable member. The biasing member may in particular be an elastic member, for example a spring. The biasing member may for example counteract the force of gravity acting on the second moveable member, for example when the second moveable member is arranged below the first moveable member. In general, the biasing member ensures that the movement of the second moveable member, and therefore the functional unit, is very uniform, smooth, and predictable.

In another preferred embodiment, the linear drive comprises at least a second spacing member engaged with the first moveable member at a third point and the second moveable member at a fourth point, and configured to maintain a constant spacing between the third point of the first moveable member and the fourth point of the second moveable member. Preferably the linear drive comprises three spacing members that are arranged symmetrically around the axis of rotation. Such a configuration distributes the load symmetrically, thereby making the linear drive more stable. Further, such a configuration reduces the bias that may be introduced by asymmetrical wear on the moving elements of the linear drive.

In another preferred embodiment, the linear drive comprises at least one linear guide configured to guide the second moveable member parallel to the axis of rotation. In one example the linear drive is arranged laterally offset to the axis of rotation. In another example, the linear drive comprises two linear guides arranged such that the axis of rotation is arranged between the two linear guides. The linear guide may for example be a cross roller guide, a plain bearing or a rolling bearing. The linear guide provides additional stability to the linear drive, in particular to the second moveable member, making the positioning of the functional unit even more reproducible. Further, the linear guide facilitates a smooth movement of the second moveable member, and thus the functional unit.

In another preferred embodiment, the first moveable member comprises a first engagement member arranged at the first point, the second moveable member comprises a second engagement member arranged at the second point, and the spacing member has a first end member engaged with the first engagement member and a second end member engaged with the second engagement member. The spacing member may be fixed to the first moveable member at the first engagement member and/or to the second moveable member at the second engagement member. Alternatively, the first moveable member and the first engagement member, and/or the second moveable member and the second engagement member may only be loosely engaged. The first and second engagement members confine the first and second end members to only rotate about the first and second points, respectively, thereby realizing kinematic pairs.

In another preferred embodiment, the spacing member is rod-shaped, the first end member comprises a first hemispherical end, and the second end member comprises a second hemispherical end. The first engagement member and the second engagement member may each comprise a recess, in particular one of a hemispherical recess, a conical recess and a cylindrical recess. In this embodiment, the kinematic pairs realized at the first and second points are spherical joints. The first and second end members form the ball and the recesses form the socket of the joint. The shape of the recess may be chosen to reduce the contact surface between the end members of the spacing member and the first and second moveable members. This reduces wear on the moving elements and makes the positioning of the functional unit even more reproducible.

In another preferred embodiment, the spacing member is rod-shaped, the first end member comprises a first hemispheric recess, and the second end member comprises a second hemispheric recess. The first engagement member may comprise a first hemispheric protrusion, and the second engagement member may comprise a second hemispheric protrusion. In this embodiment, the first and second end members each form the socket of a spherical joint while the hemispheric protrusions form the balls. The use of a socket joint has the above-mentioned advantages, in particular with regards to the positioning of the functional unit.

In another preferred embodiment, the first end member and the second end member of the spacing member comprise one of the following materials: brass, ceramic, glass, and steel. At least the first engagement member of the first moveable member comprises one of the following materials: brass, ceramic, glass, and steel. At least the second engagement member of the second moveable member comprises one of the following materials: brass, ceramic, glass, and steel. The following material combinations, meaning the end member comprises one material of the combination and the respective engagement member comprises the other material of the combination, are preferred: glass and brass, brass and steel, glass and ceramic, glass and glass, and ceramic and steel. The afore-mentioned materials are extremely durable and exhibit almost no wear. In addition, glass exhibits almost no thermal expansion. Therefore, the afore-mentioned combinations facilitate a long lifetime of the linear drive during which the movement of the second moveable member, and therefore the positioning of the functional unit, remains predictable, even without the use of an active control system such as a closed-loop control system.

In another preferred embodiment, the second moveable member comprises an arm arranged perpendicular to the axis of rotation, and the functional unit is connected to the arm such that the functional unit is mounted to the linear drive laterally offset to the axis of rotation. Since the functional unit is mounted laterally offset to the moving elements of the linear drive, a clearance is provided above and below the functional unit. This allows other elements, for example optical elements of the microscope or a sample to be arranged above and/or below the functional unit. The linear drive may also comprise a linear guide configured to guide the arm parallel to the axis of rotation. In particular, the linear guide may be arranged between the axis of rotation and the functional unit. In such an arrangement, the linear guide supports the arm, thereby providing additional stability.

The invention further relates to a microscope comprising the functional unit and the linear drive according to any one of the preceding claims. The linear drive is configured to move the functional unit.

The microscope has the same advantages as the claimed linear drive. In particular, the microscope can be supplemented with the features described in this document in connection with the linear drive. Furthermore, the linear drive described above can be supplemented with the features described in this document in connection with the microscope.

In a preferred embodiment, the functional unit is a microscope stage configured to receive a sample or a nosepiece of the microscope comprising at least one microscope objective. The nosepiece may be a revolving nosepiece or objective turret comprising two or more microscope objectives. The nosepiece may be moved along the optical axis of the microscope by the linear drive in order to adjust the focal position of the microscope. Since the linear drive allows for a very precise positioning of the nosepiece, the focal position of the microscope may be adjusted very precisely. The microscope stage may be moved along any direction, in particular the x-direction, the y-direction, and the z-direction of the microscope, allowing for a very precise positioning of the sample. The axis of rotation of the linear drive may in particular be parallel to the optical axis of the microscope. Since the optical axis is also called the z-axis of a microscope, the linear drive is a z-drive of the microscope.

Short Description of the Figures

Hereinafter, specific embodiments are described referring to the drawings, wherein:

| | |
|---|---|
| Figure 1 | is a schematic view of a linear drive for moving a functional unit of a microscope according to an embodiment; |
| Figure 2 | is another schematic view of the linear drive for moving the functional unit of the microscope according to Figure 1; |
| Figure 3 | is a schematic view of a linear drive for moving the functional unit of the microscope according to another embodiment having an arm; |
| Figure 4 | is a schematic view of a linear drive for moving the functional unit of the microscope according to another embodiment comprising a rotary drive; |
| Figure 5 | is a schematic view of a linear drive for moving the functional unit of the microscope according to another embodiment comprising a biasing member; |
| Figure 6 | is a schematic view of a linear drive for moving the functional unit of the microscope according to another embodiment comprising the biasing member; |
| Figure 7 | is a schematic view of a linear drive for moving the functional unit of the microscope according to another embodiment comprising a toothed belt transmission; |
| Figure 8 | is a schematic view of a linear drive for moving the functional unit of the microscope according to another embodiment comprising a gear transmission; |
| Figure 9 | is a schematic view of a linear drive for moving the functional unit of the microscope according to another embodiment; |
| Figures 10a and 10b | are schematic perspective views of a linear drive for moving the functional unit of the microscope according to another embodiment; |
| Figures 11a to 11d | are schematic detailed views of one of the linear drives according to any one of the Figures 1 to 10 and 12 to 13b; |
| Figure 12 | is a schematic view of a linear drive for moving the functional unit of the microscope according to another embodiment with one spacing member; |
| Figures 13a and 13b | are schematic perspective views of a linear drive for moving the functional unit of the microscope according to another embodiment having only one spacing member; and |
| Figure 14 | is a schematic view of a microscope according to an embodiment. |

Detailed Description

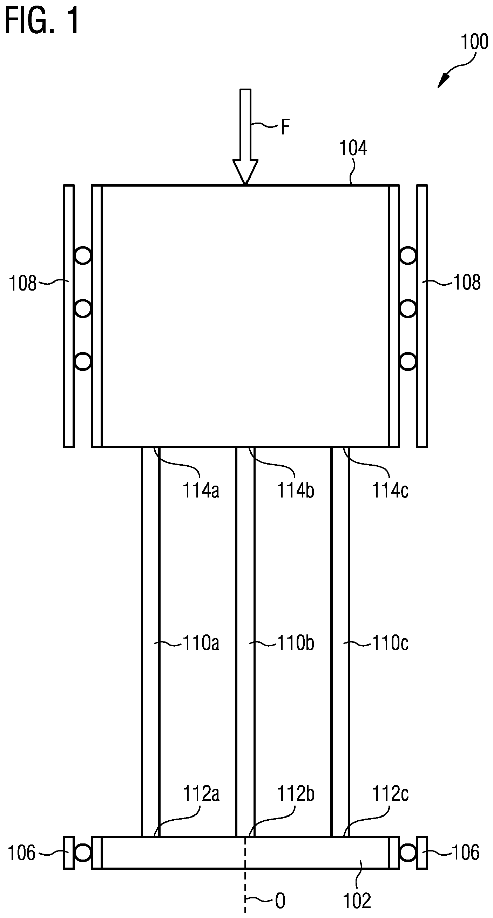

Figure 1 is a schematic view of a linear drive 100 for moving a functional unit 302 of a microscope 1400 according to an embodiment.

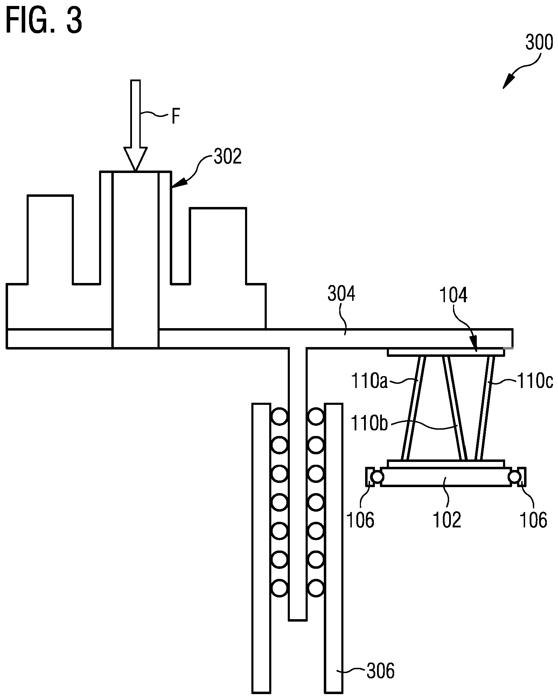

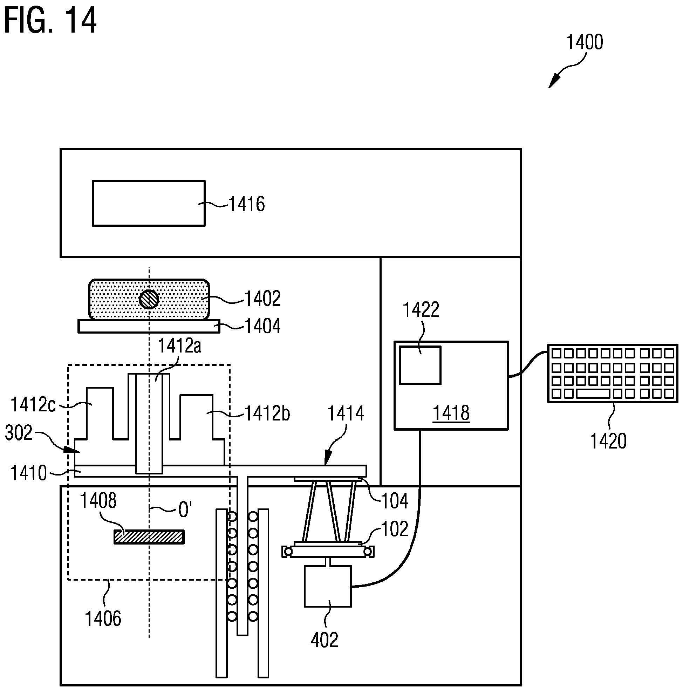

The linear drive 100 is configured to convert a rotational movement of a first moveable member 102 into a linear movement of a second moveable member 104 which mounts the functional unit 302 (c.f. Figure 3) of the microscope 1400 (c.f. Figure 14). The weight of the functional unit 302 pressing down on the second moveable member 104 is represented by an arrow F in Figure 1. In the view shown in figure 1, the distance between the first moveable member 102 and the second moveable member 104 is maximal. The distance between the first moveable member 102 and the second moveable member 104 is also called the height of the second moveable member 104 in this document.

The first moveable member 102 is mounted by a rolling bearing 106 such that the first moveable member 102 can rotate about an axis of rotation O, and that the first moveable member 102 is fixed with respect to linear movement along the axis of rotation O. The second moveable member 104 is mounted above the first moveable member 102 by two linear guides 108 arranged laterally offset to the axis of rotation O. The second moveable member 104 is mounted by the two linear guides 108 such that the second moveable member 104 can perform a linear movement along the axis of rotation O, but is fixed against rotation about the axis of rotation O.

The conversion of the rotational movement of the first moveable member 102 into the linear movement of the second moveable member 104 is facilitated by at least one spacing member 110a that is engaged with the first moveable member 102 at a first point 112a and with the second moveable member 104 at a second point 114a. In the embodiment shown in Figure 1, the linear drive 100 comprises three spacing members 110a, 110b, 110c, which are exemplary designed to be rod-shaped. Embodiments of the linear drive 100 comprising only one spacing member 1202 is described below with reference to Figures 12 and 13.

A second spacing member 110b is engaged with the first moveable member 102 at a third point 112b and with the second moveable member 104 at a fourth point 114b. A third spacing member 110c is engaged with the first moveable member 102 at a fifth point 112c and with the second moveable member 104 at a sixth point 114c. Each of the points 112a, 112b, 112c, 114a, 114b, 114c is arranged at a distance from the axis of rotation O. In the embodiment shown in Figure 1, the points 112a, 112b, 112c, 114a, 114b, 114c are located at the same distance from the axis of rotation O. Other configurations are possible, for example the points 112a, 112b, 112c on the first moveable member 102 may all be located at a first distance from the axis of rotation O, and the points 114a, 114b, 114c on the second moveable member 104 may all be located at a second distance from the axis of rotation O.

In the view shown in figure 1, where the distance between the first moveable member 102 and the second moveable member 104 is maximal, the spacing members 110a, 110b, 110c are parallel to the axis of rotation O. In other words, the second point 114a is located directly above the first point 112a, the fourth point 114b is located directly above the third point 112b, and the sixth point 114c is located directly above the fifth point 112c. In an embodiment, where the points 112a, 112b, 112c, 114a, 114b, 114c are not located at the same distance from the axis of rotation O, each spacing member 110a, 110b, 110c is located in the same plane as the axis of rotation O, when the distance between the first moveable member 102 and the second moveable member 104 is maximal.

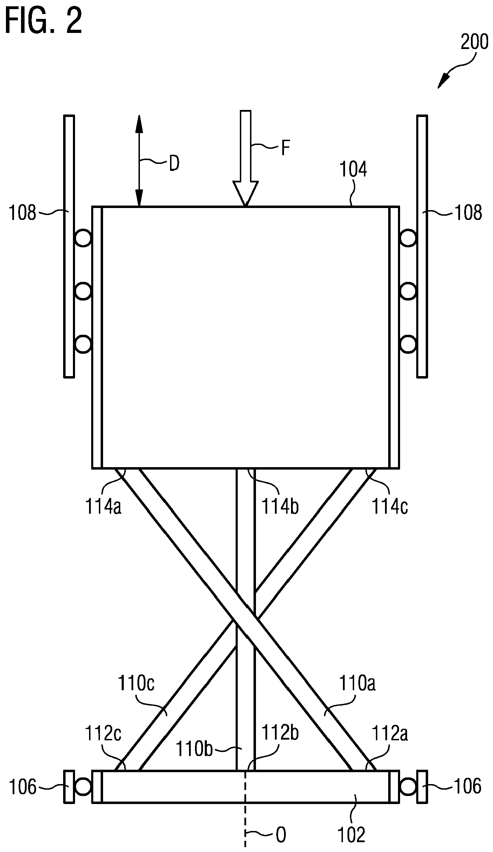

Each spacing member 110a, 110b, 110c is configured to maintain a constant distance between the points 112a, 112b, 112c, 114a, 114b, 114c at which each respective spacing member 110a, 110b, 110c engages the first moveable member 102 and the second moveable member 104. The constant distances are maintained by the spacing members 110a, 110b, 110c based on the mechanical principle of positive locking. Thus, a rotational force applied to the first moveable member 102 is transmitted via the spacing members 110a, 110b, 110c to the second moveable member 104. When a rotational force is applied to the first moveable member 102, the first point 112a, the third point 112b, and the fifth point 112c are rotated about the axis of rotation O. Since the second moveable member 104 is fixed with respect to rotation about the axis of rotation O, the second point 114a, the fourth point 114b, and the sixth point 114c cannot follow the rotational motion of the first point 112a, the third point 112b, and the fifth point 112c. This results in a tilting motion of the spacing members 110a, 110b, 110c, effectively twisting the arrangement of the three spacing members 110a, 110b, 110c about the axis of rotation O. This twisting of the spacing members 110a, 110b, 110c results in the linear movement of the second moveable member 104, as is described below with reference to Figure 2.

Figure 2 is another schematic view of the linear drive 100 for moving the functional unit 302 of the microscope 1400 according to Figure 1.

In the view shown in Figure 2, the distance between the first moveable member 102 and the second moveable member 104 is less than in Figure 1. The difference in distance or height is called the stroke of the linear drive 100 in this document and is shown in Figure 2 as a double headed arrow D.

When the spacing members 110a, 110b, 110c tilt, the distance between the first moveable member 102 and the second point 114a, the fourth point 114b, and the sixth point 114c, respectively, is reduced. In other words, the tilting motion of the spacing members 110a, 110b, 110c reduces the height or distance along the axis of rotation O of the second point 114a, the fourth point 114b, and the sixth point 114c, respectively, with respect to the first moveable member 102. Since the second moveable member 104 engages the spacing members 110a, 110b, 110c from above and is pressed down by the weight F of the functional unit 302, the tilting of the spacing members 110a, 110b, 110c results in the linear motion of the second moveable member 104 along the axis of rotation O. Thus, the movement of the second moveable member 104 is determined solely by geometric principles.

The first moveable member 102 may be rotated until the spacing members 110a, 110b, 110c collide, effectively blocking any further rotation of the first moveable member 102. However, it is advantageous to design the linear drive 100 such that the spacing members 110a, 110b, 110c a tilted by 45° to 180° at most and do not collide. This can be achieved for example by mechanical or electronical stops. Likewise, it is advantageous when the spacing members 110a, 110b, 110c are not fully vertical but are already tilted in one direction when the height of the second element is maximal. This tilt of the spacing members 110a, 110b, 110c at the maximal height biases the spacing members 110a, 110b, 110c to tilt in a predetermined direction when the first moveable member 102 is rotated, making the movement of the second moveable member 104 more predictable. Again, this can be achieved by mechanical or electronical stops.

Figure 3 is a schematic view of a linear drive 300 for moving the functional unit 302 of the microscope 1400 according to another embodiment having an arm 304.

The linear drive 300 according to Figure 3 is distinguished from the linear drive 100 according to Figures 1 and 2 in that the second moveable member 104 comprises the arm 304 on which the functional unit 302 is mounted. The arm 304 extends perpendicular to the axis of rotation O and away from the axis of rotation O. The functional unit 302 is mounted by the arm 304 laterally offset to the axis of rotation O such that there is clearance above and below the functional unit 302. A linear guide 306 supports the arm 304 and facilitates a linear movement of the arm 304 parallel to the axis of rotation O. The linear guide 306 is arranged between the functional unit 302 and the axis of rotation O, such that the weight F of the functional unit 302 does not tilt the arm 304, thereby providing additional stability to the linear drive 300.

In the embodiment shown in Figure 3, the functional unit 302 is exemplary formed as a microscope nosepiece comprising an objective revolver. The linear movement of the microscope nosepiece facilitated by the linear drive 300 corresponds to an adjustment of the focal position of the microscope 1400. However, the functional unit 302 may also be a microscope stage for mounting a sample or any other functional unit of a microscope that needs to be moved linearly.

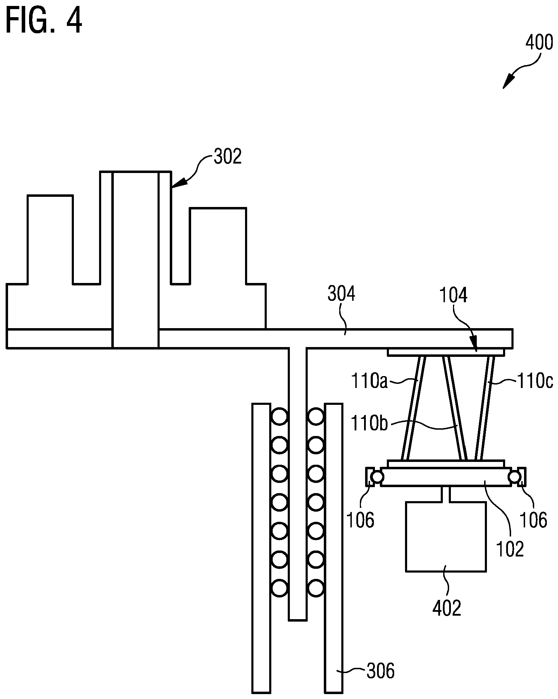

Figure 4 is a schematic view of a linear drive 400 for moving the functional unit 302 of the microscope 1400 according to another embodiment comprising a rotary drive 402.

The linear drive 400 according to Figure 4 is distinguished from the linear drive 300 according to Figure 3 in comprising the rotary drive 402 for rotating the first moveable member 102. In the embodiment shown in Figure 4, the rotary drive 402 is exemplary formed as a motor. The output of the rotary drive 402 is directly connected to the first moveable member 102. There are no intermediate elements between the rotary drive 402 and the first moveable element that could wear out, thereby causing slack. The reduction of slack between elements that translate the torque generated by the rotary drive 402 into the linear movement of the functional unit 302 ensures that the linear movement remains predictable over time.

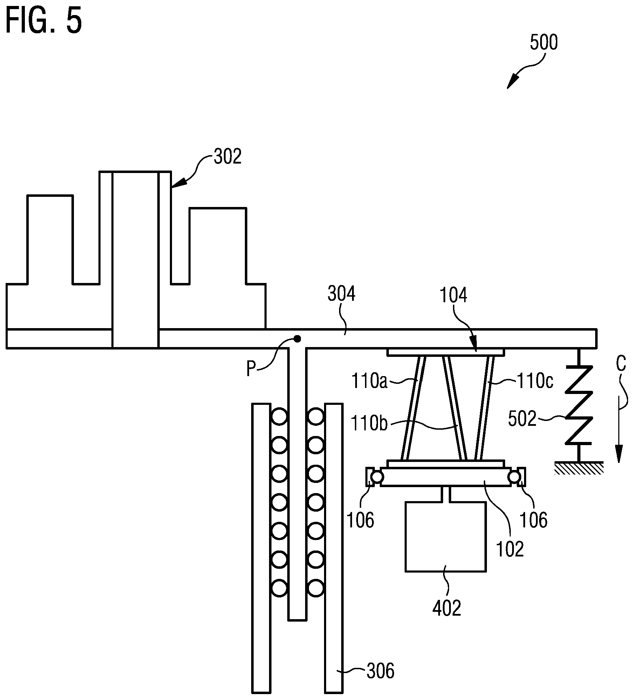

Figure 5 is a schematic view of a linear drive 500 for moving the functional unit 302 of the microscope 1400 according to another embodiment comprising a biasing member 502.

The linear drive 500 according to Figure 5 is distinguished from the linear drive 400 according to Figure 4 in comprising the biasing member 502 for biasing the second moveable member 104 towards the first moveable member 102. In the embodiment shown in Figure 5, the biasing member 502 is exemplary formed as a spring and arranged laterally offset to the axis of rotation O, opposite the linear guide 306. The linear guide 306 supports the arm 304 of the second moveable member 104. However, this support forms a fulcrum point P about which the arm 304 can rotate, in particular if the functional unit 302 is heavy. In the configuration shown in Figure 5, the biasing member 502 provides a force counteracting this rotation of the arm 304, thereby making the linear drive 500 more stable. The force generated by the biasing member 502 is denoted in Figure 5 by an arrow C.

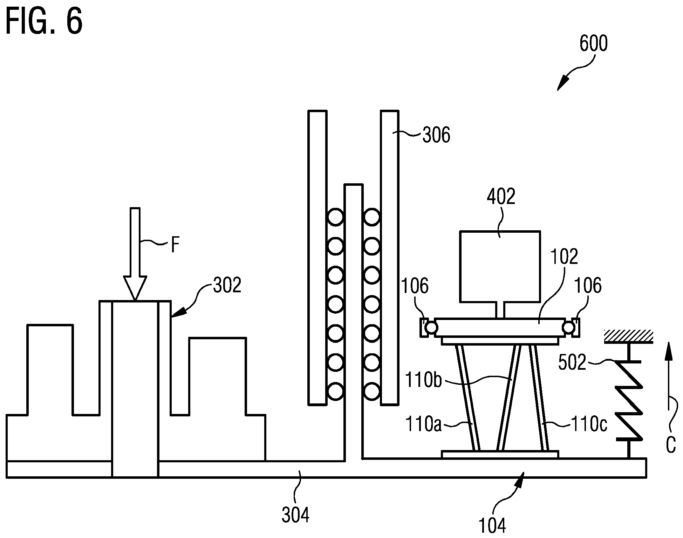

Figure 6 is a schematic view of a linear drive 600 for moving the functional unit 302 of the microscope 1400 according to another embodiment comprising the biasing member 502.

The linear drive 600 according to Figure 6 is distinguished from the linear drive 500 according to Figure 5 in that the first moveable member 102 is arranged above the second moveable member 104. In the embodiments according to Figures 1 to 5 the main force biasing the second moveable member 104 towards the first moveable member 102 was the weight F of the functional unit 302. In the present embodiment, the weight F of the functional unit 302 biases the second moveable member 104 away from the first moveable member 102. The force C exerted by the biasing member 502 counteracts the weight F of the functional unit 302, thereby facilitating a linear movement of the second moveable member 104 towards the first moveable member 102. The present embodiment may be advantageous, for example if installation space is limited.

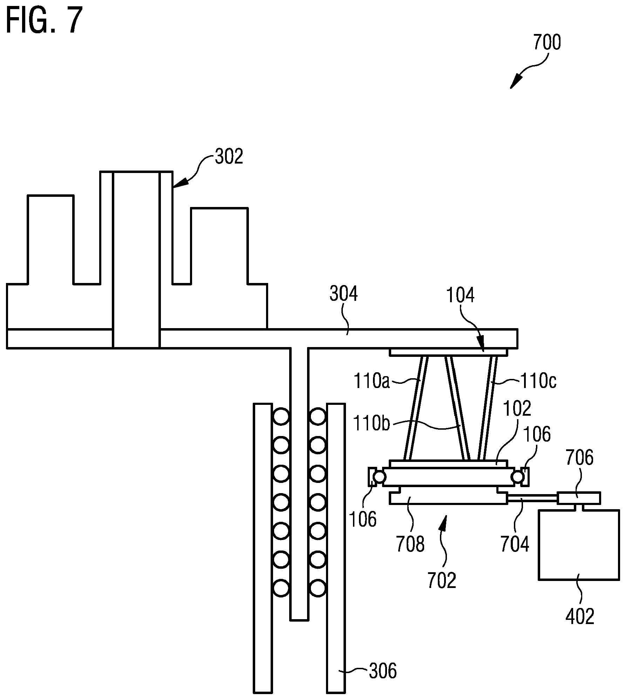

Figure 7 is a schematic view of a linear drive 700 for moving the functional unit 302 of the microscope 1400 according to another embodiment comprising a belt transmission 702.

The linear drive 700 according to Figure 7 is distinguished from the linear drive 400 according to Figure 4 in comprising the belt transmission 702 for transmitting the torque generated by the rotary drive 402 to the first moveable member 102. The belt transmission 702 comprises a toothed belt 704, a first gear 706 of the rotary drive 402, and a second gear 708 of the first moveable member 102. The toothed belt 704 connects the first gear 706 to the second gear 708, thereby transmitting the torque generated by the rotary drive 402 to the first moveable member 102. In the embodiment shown in Figure 7, the belt transmission 702 allows the rotary drive 402 to be mounted laterally offset to the axis of rotation O. This may be advantageous when installation space is limited.

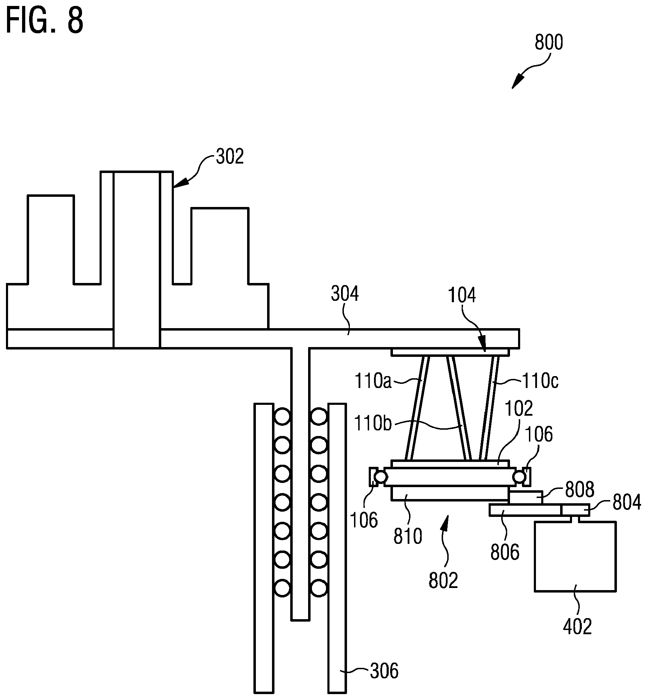

Figure 8 is a schematic view of a linear drive 800 for moving the functional unit 302 of the microscope 1400 according to another embodiment comprising a gear transmission 802.

The linear drive 800 according to Figure 8 is distinguished from the linear drive 400 according to Figure 4 in comprising the gear transmission 802 for transmitting the torque generated by the rotary drive 402 to the first moveable member 102. The gear transmission 802 comprises a first gear 804 of the rotary drive 402, a second gear 806, a third gear 808, and a forth gear 810 of the first moveable member 102. The first gear 804 and the second gear 806 are in mesh. The second gear 806 is connected to the third gear 808 by an axle. The third gear 808 and the fourth gear 810 are in mesh. In the embodiment shown in Figure 8, the gears 804, 806, 808, 810 are dimensioned such that the gear transmission 802 is a reducing transmission reducing the speed of the rotation generated by the rotary drive 402.

In the embodiment according to Figure 8, the reducing gear transmission 802 not only increases the torque applied to the first moveable member 102, allowing heavier loads to be moved by a less powerful motor, but also reduces the effective step size of the rotary drive 402. Thus, the reducing gear transmission 802 also allows for a finer adjustment of the position of the second moveable member 104, and therefore the functional unit 302.

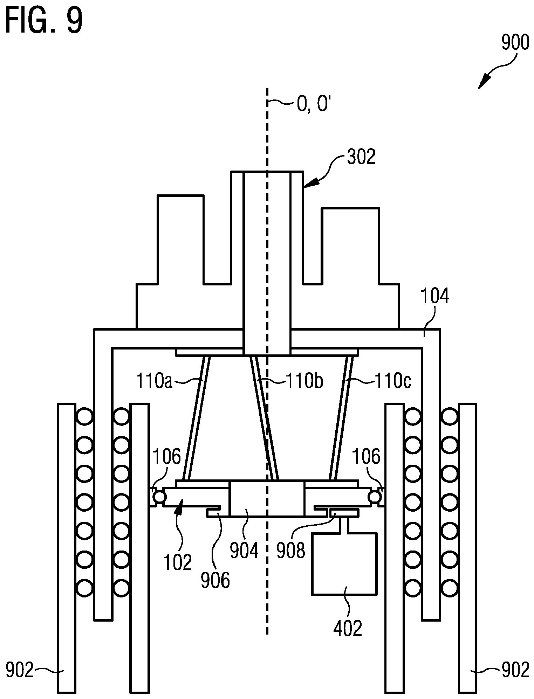

Figure 9 is a schematic view of a linear drive 900 for moving the functional unit 302 of the microscope 1400 according to another embodiment.

The linear drive 900 according to Figure 8 is distinguished from the linear drive 900 according to Figure 4 in that the functional unit 302 is arranged on the axis of rotation O. The functional unit 302 is exemplary formed as a microscope nosepiece comprising at least one microscope objective. The optical axis O' of the microscope objective is coaxial with the axis of rotation O. In this embodiment, the linear drive 900 is especially compact.

The linear drive 900 according to the present embodiment comprises two linear guides 902 mounting the second moveable member 104. The linear guides 902 are arranged to the left and the right of the first moveable member 102 in Figure 9. This symmetric arrangement of the linear guides 902 provides additional stability to the linear drive 900 and prevent the second moveable member 104 from being loaded on one side.

The first moveable member 102 comprises an opening 904 arranged centrally on the first moveable member 102. The opening 904 is arranged such that the optical axis O' of the microscope objective can pass through the first moveable member 102 unobstructed, thereby not obstructing a beam path along the optical axis O'. The first moveable member 102 further comprises a ring gear 906 arranged around the opening. The ring gear 906 of the first moveable member 102 is engaged with a gear 908 of the rotary drive 402. This arrangement allows the rotary drive 402 to be arrange laterally offset to the axis of rotation O and the optical axis O' of the microscope objective, thereby not obstructing the beam path along the optical axis O'. Alternatively, the rotary drive 402 may be connected to the first moveable member 102 by the belt transmission 702.

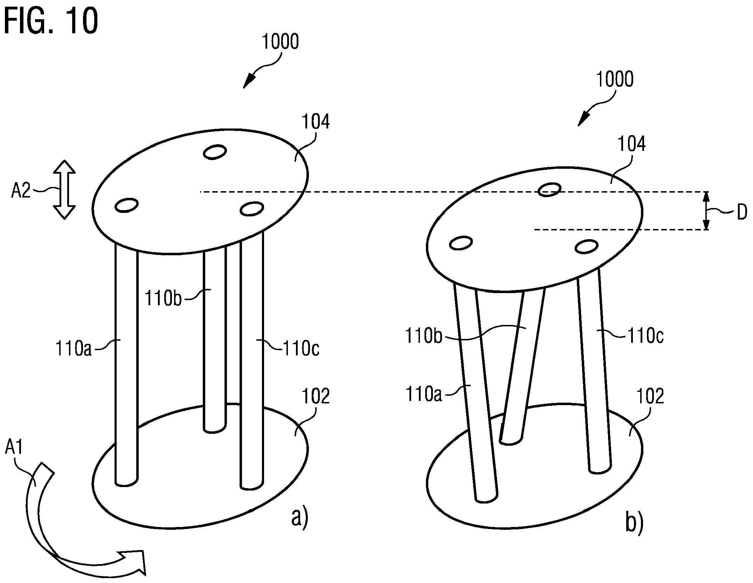

Figures 10a and 10b are schematic perspective views of a linear drive 1000 for moving the functional unit 302 of the microscope 1400 according to another embodiment.

The first moveable member 102 and the second moveable member 104 have each only one degree of freedom. The first moveable member 102 can only rotate about the axis of rotation O. This is shown in Figure 10a by a first arrow A1. The second moveable member 104 can only move linearly along the axis of rotation O. This is shown in Figure 10a by a second arrow A2. In Figure 10a the second moveable member 104 is at its maximum height, i.e. the distance between the first moveable member 102 and the second moveable member 104 is maximal. At the maximum height, the three spacing members 110a, 110b, 110c are all vertical and parallel to the axis of rotation O. Thus, the maximum height is determined by the length of the spacing members 110a, 110b, 110c.

When the first moveable member 102 is rotated, the spacing members 110a, 110b, 110c tilt, as is shown in Figure 10b. In other words: The configuration of the three spacing members 110a, 110b, 110c is twisted about the axis of rotation O. This tilting motion of the spacing members 110a, 110b, 110c reduces the height of the second moveable member 104. The difference in height between the maximum height shown in Figure 10a and the height of the second moveable member 104 in Figure 10b is shown in Figure 10b by the arrow D. It may be advantageous to limit the rotation of the first moveable member 102, for example by means of a mechanical stop or by controlling the rotary drive 402 such that the range of rotation of the rotary drive 402 is limited.

In the embodiment shown in Figures 10a and 10b, the first moveable member 102 and the second moveable member 104 are exemplary designed to be disc-shaped. Since the first moveable member 102 rotates, the disc-shape is naturally advantageous. The second moveable member 104 may be made identical to the first moveable member 102 to simplify manufacture of the linear drive 1000.

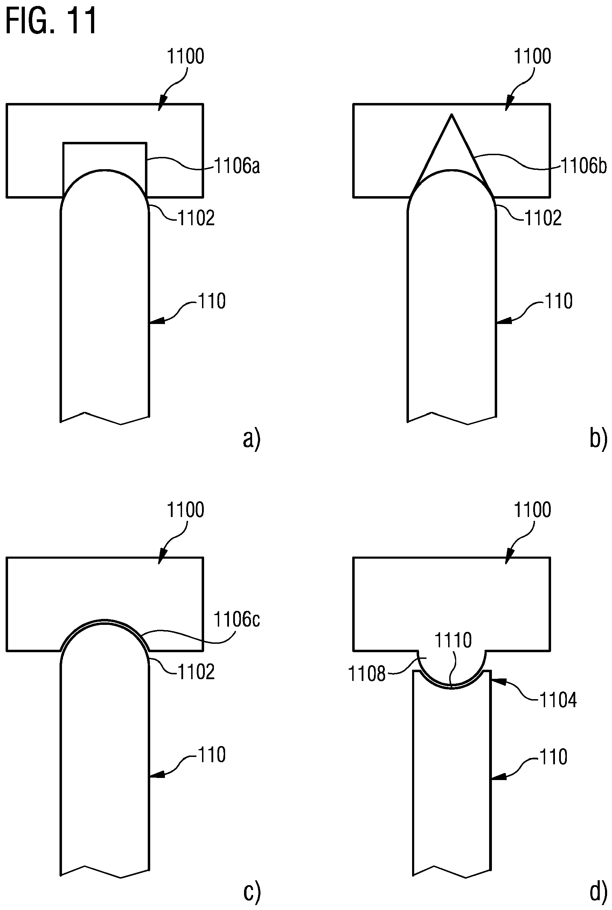

Figures 11a to 11d are schematic detailed views of one of the linear drives 100, 300, 400, 500, 600, 700, 800, 900, 1000, 1200, 1300 according to any one of the Figures 1 to 10 and 12 to 13b.

The detailed views each show a section of the linear drive 100, 300, 400, 500, 600, 700, 800, 900, 1000, 1200, 1300 where an end member 1102, 1104 of one of the spacing members 110a, 110b, 110c engages with one of the moveable members 102, 104. The spacing member 110a, 110b, 110c is referred to in in Figures 11a to 11d and the following as spacing member 110 for sake of simplicity. The moveable member is referenced by the reference sign 1100 in Figures 11a to 11d. However, the moveable member 1100 may be both the first moveable member 102 or the second moveable member 104. Likewise, the end member 1102, 1104 shown in Figures 11a to 11d may be a first end member 1102a, 1104a engaged with the first moveable member 102 or a second end member 1102b, 1104b engaged with the second moveable member 104.

In the embodiments according to Figures 11a to 11c, the spacing member 110 comprises a hemispherical end member 1102 engaged with a recess 1106a, 1106b, 1106c in the moveable member 1100. In these embodiments, the end member 1102 forms the ball and the recess 1106a, 1106b, 1106c forms the socket of a ball and socket joint. When the recess 1106a, 1106b, 1106c is arranged in the first moveable member 102, the recess 1106a, 1106b, 1106c forms a first engagement member of the first moveable member 102. When the recess 1106a, 1106b, 1106c is arranged in the second moveable member 104, the recess 1106a, 1106b, 1106c forms a second engagement member of the second moveable member 104.

In the embodiment according to Figure 11a, the recess 1106a in the moveable member 1100 is exemplary formed as a cylindrical recess 1106a. This configuration limits the contact surface between the spacing member 110 and the moveable member 1100. This reduces friction and allows for a smoother movement of the moving elements of the linear drive 1100. In the embodiment according to Figure 11b, the recess 1106b in the moveable member 1100 is exemplary formed as a conical recess 1106b. Like the cylindrical recess 1106a, the conical recess 1106b limits the contact surface between the spacing member 110 and the moveable member 1100. In the embodiment according to Figure 11c, the recess 1106c in the moveable member 1100 is exemplary formed as a hemispherical recess 1106c. This configuration has a large contact surface, thereby reducing wear to the spacing member 110 and the moveable member 1100.

In the embodiment according to Figure 11d, the moveable member 1100 comprises a hemispherical protrusion 1108 that is engaged with a hemispherical recess 1110 of the end member 1104. In this embodiment, the protrusion 1108 forms the ball and the end member 1104 forms the socket of a ball and socket joint. When the protrusion 1108 is arranged on the first moveable member 102, the protrusion 1108 forms the first engagement member of the first moveable member 102. When the protrusion 1108 is arranged on the second moveable member 104, the protrusion 1108 forms the second engagement member of the second moveable member 104.

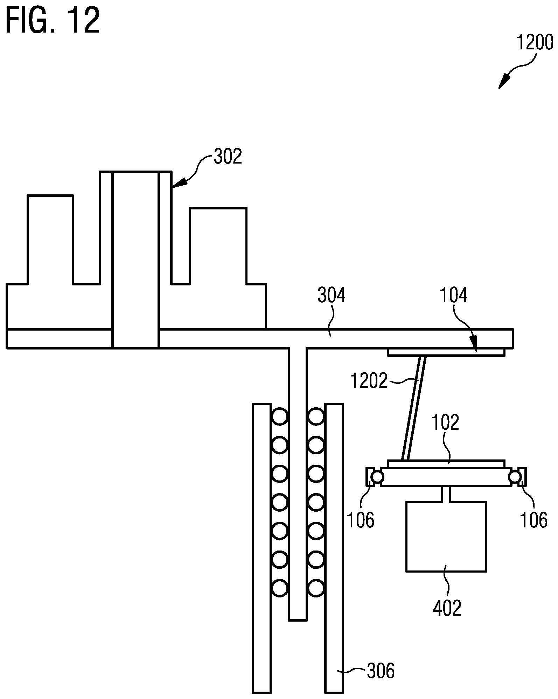

Figure 12 is a schematic view of a linear drive 1200 for moving the functional unit 302 of the microscope 1400 according to another embodiment with one spacing member 1202.

The linear drive 1200 according to Figure 12 is distinguished from the linear drive 400 according to Figure 4 in having only one rod-shaped spacing member 1202. While embodiments of the linear drive 100, 300, 400, 500, 600, 700, 800, 900, 1000, 1414 having three symmetrically arranged spacing members 110a, 110b, 110c are very stable, having only one spacing member 1202 is sufficient for the linear drive 1200 to work. Having only one spacing member 1202 may be advantageous when space and/or weight considerations are important. Having only one spacing member 1202 also reduces the number of moving parts of the linear drive 1200, thereby reducing points of failure.

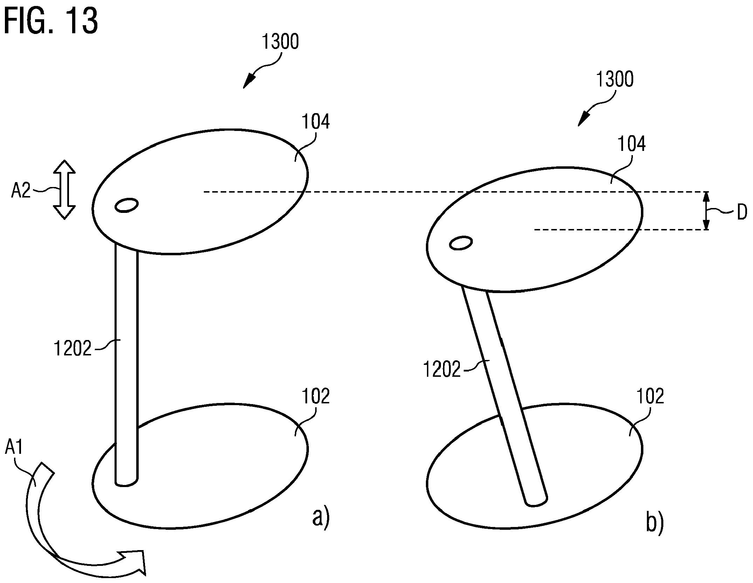

Figures 13a and 13b are schematic perspective views of a linear drive 1300 for moving the functional unit 302 of the microscope 1400 according to another embodiment having the only one spacing member 1202.

The first arrow A1 in Figure 13a indicates that the first moveable member 102 can only rotate about the axis of rotation O. The second arrow A2 in Figure 13a indicates that the second moveable member 104 can only move linearly along the axis of rotation O. In Figure 13a the second moveable member 104 is at its maximum height, i.e. the distance between the first moveable member 102 and the second moveable member 104 is maximal. At the maximum height, the single spacing member 1202 is vertical and parallel to the axis of rotation O.

Figure 13b shows a view in which the first moveable member 102 has been rotated from the position in which the height is maximal. This rotation has caused the single spacing member 1202 to tilt, thereby reducing the height of the second moveable member 104. The difference in height between the maximum height shown in Figure 13a and the height of the second moveable member 104 is shown in Figure 13b by the arrow D.

Figure 14 is a schematic view of a microscope 1400 according to an embodiment.

The microscope 1400 is exemplary formed as an inverse microscope 1400. However, the microscope 1400 may also be any other type of microscope, for example an upright microscope or a box type microscope.

The microscope 1400 is configured to image a sample 1402 arranged on a microscope stage 1404. For capturing an image of the sample 1402, the microscope 1400 comprises an optical imaging system 1406. The optical imaging system 1406 comprises a detector element 1408, and an objective turret 1410 comprising three objectives 1412a, 1412b, 1412c. The objective turret 1410 is part of a nosepiece of the microscope 1400 that is mounted as the functional unit 302 on a linear drive 1414. The linear drive 1414 may be any one of the linear drives 100, 300, 400, 500, 600, 700, 800, 900, 1000, 1200, 1300 according to any one of the Figures 1 to 13.

The objective 1412a currently swapped into the optical axis O' of the microscope 1400 receives detection light emitted by the sample 1402 and directs the received detection light towards the detector element 1408. An illumination unit 1416 configured to illuminate the sample 1402 is exemplary arranged above the sample 1402. Thus, the microscope 1400 according to the present embodiment is configured for transmitted light microscopy.

The microscope 1400 further comprises a controller 1418 of the linear drive 1414. The controller 1418 is connected to at least the rotary drive 402 and to an input device 1420 of the linear drive 1414, and configured to control the linear drive 1414. In particular, the controller 1418 is configured to receive a user input via the input device 1420, the user input corresponding to a distance the nosepiece is to be moved. The controller 1418 is further configured to control the rotary drive 402 to rotate the first moveable member 102 such that the second moveable member 104 is moved the distance corresponding to the user input. The amount of rotation may be determined by the controller 1418 based on a functional relation or read from a table stored in a memory 1422 of the controller 1418.

In the present embodiment, the linear drive 1414 mounts the microscope turret 1410 as the functional unit 302.

However, the linear drive 1414 may alternatively mount the microscope stage 1404 as the functional unit 302.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Reference signs

| | |
|---|---|
| 100 | Linear drive |
| 102, 104 | Moveable member |
| 106 | Rolling bearing |
| 108 | Linear guide |
| 110a, 110b, 110c | Spacing member |
| 112a, 112b, 112c, 114a, 114b, 114c | Point |
| 300 | Linear drive |
| 302 | Functional unit |
| 304 | Arm |
| 306 | Linear guide |
| 400 | Linear drive |
| 402 | Rotary drive |
| 500 | Linear drive |
| 502 | Biasing member |
| 600 | Linear drive |
| 700 | Linear drive |
| 702 | Belt transmission |
| 704 | Toothed belt |
| 706, 708 | Gear |
| 800 | Linear drive |
| 802 | Gear transmission |
| 804, 806, 808, 810 | Gear |
| 900 | Linear drive |
| 902 | Linear guide |
| 904 | Opening |
| 906 | Ring gear |
| 908 | Gear |
| 1000 | Linear drive |
| 1100 | Moveable member |
| 1102, 1102a, 1102b, 1104, 1104a, 1104b | End member |
| 1106a, 1106b, 1106c | Recess |
| 1108 | Protrusion |
| 1110 | Recess |
| 1200 | Linear drive |
| 1202 | Spacing member |
| 1300 | Linear drive |
| 1400 | Microscope |
| 1402 | Sample |
| 1404 | Microscope stage |
| 1406 | Optical imaging system |
| 1408 | Detector element |
| 1410 | Objective turret |
| 1412a, 1412b, 1412c | Objective |
| 1414 | Linear drive |
| 1416 | Illumination unit |

| 1418 | Controller |
| 1420 | Input device |
| 1422 | Memory |
| A1, A2 | Arrows |
| C | Arrow |
| D | Arrow |
| F | Arrow |
| O | Axis of rotation |
| P | Fulcrum point |
| O' | Optical axis |

**Claims**

1. Linear drive (100, 300, 400, 500, 600, 700, 800, 900, 1000, 1200, 1300, 1414) for moving a functional unit (302) of a microscope (1400), comprising:

   a first moveable member (102) that is rotatable about an axis of rotation (O) and fixed with respect to linear movement along the axis of rotation (O);
   a second moveable member (104) that is connected to the functional unit (302), fixed against rotation about the axis of rotation (O) and moveable along the axis of rotation (O); and
   a spacing member (110, 110a, 1202) engaged with the first moveable member (102) at a first point (112a) and the second moveable member (104) at a second point (114a), and configured to maintain a constant spacing between the first point (112a) of the first moveable member (102) and the second point (114a) of the second moveable member (104).

2. The linear drive (400, 500, 600, 700, 800, 900, 1000, 1200, 1300, 1414) according to claim 1, comprising a rotary drive (402) configured to rotate the first moveable member (102).

3. The linear drive (1414) according to claim 2, comprising a controller (1418) for controlling the rotary drive (402) configured to receive a user input corresponding to a distance, and to control the rotary drive (402) to rotate the first moveable member (102) such that the second moveable member (104) is moved the distance corresponding to the user input.

4. The linear drive (700, 800, 900) according to claim 2 or 3, comprising a transmission (702, 802) arranged between the rotary drive (402) and the first moveable member (102), in particular a belt transmission (702) and/or a gear transmission (802).

5. The linear drive (500, 600) according to any one of the preceding claims, comprising a biasing member (502) configured to bias the second moveable member (104) towards the first moveable member (102).

6. The linear drive (100, 300, 400, 500, 600, 700, 800, 900, 1000, 1414) according to any one of the preceding claims, comprising at least a second spacing member (110b) engaged with the first moveable member (102) at a third point (112b) and the second moveable member (104) at a fourth point (114b), and configured to maintain a constant spacing between the third point (112b) of the first moveable member (102) and the fourth point (114b) of the second moveable member (104).

7. The linear drive (100, 300, 400, 500, 600, 700, 800, 900, 1000, 1200, 1300, 1414) according to any one of the preceding claims, comprising at least one linear guide (108, 306, 902) configured to guide the second moveable member (104) parallel to the axis of rotation (O).

8. The linear drive (100, 300, 400, 500, 600, 700, 800, 900, 1000, 1200, 1300, 1414) according to any one of the preceding claims, wherein the first moveable member (102) comprises a first engagement member (1106a, 1106b, 1106c, 1108) arranged at the first point (112a), the second moveable member (104) comprises a second engagement (1106a, 1106b, 1106c, 1108) member arranged at the second point (114a), and the spacing member (110, 110a, 1202) has a first end member (1102a, 1104a) engaged with the first engagement member (1106a, 1106b, 1106c, 1108) and a second end member (1102b, 1104b) engaged with the second engagement member (1106a, 1106b, 1106c, 1108).

11

9. The linear drive (100, 300, 400, 500, 600, 700, 800, 900, 1000, 1200, 1300, 1414) according to claim 8, wherein the spacing member (110, 110a, 1202) is rod-shaped, the first end member (1102a) comprises a first hemispherical end, and the second end member (1102b) comprises a second hemispherical end; and wherein the first engagement member and the second engagement member each comprise a recess (1106a, 1106b, 1106c), in particular one of a hemispherical recess (1106c), a conical recess (1106b) and a cylindrical recess (1106a).

10. The linear drive (100, 300, 400, 500, 600, 700, 800, 900, 1000, 1200, 1300, 1414) according to claim 8, wherein the spacing member (110, 110a, 1202) is rod-shaped, the first end member (1104a) comprises a first hemispheric recess (1110), and the second end member (1104b) comprises a second hemispheric recess (1110); and wherein the first engagement member comprises a first hemispheric protrusion (1108), and the second engagement member comprises a second hemispheric protrusion (1108).

11. The linear drive (100, 300, 400, 500, 600, 700, 800, 900, 1000, 1200, 1300, 1414) according to any one of the claims 8 to 10, wherein the first end member (1102a, 1104a) and the second end member (1102b, 1104b) of the spacing member (110, 110a, 1202) comprise one of the following materials: brass, ceramic, glass, and steel; wherein at least the first engagement member of the first moveable member (102) comprises one of the following materials: brass, ceramic, glass, and steel; and wherein at least the second engagement member of the second moveable member (104) comprises one of the following materials: brass, ceramic, glass, and steel.

12. The linear drive (300, 400, 500, 600, 700, 800, 1000, 1200, 1300, 1414) according to any one of the preceding claims, wherein the second moveable member (104) comprises an arm (304) arranged perpendicular to the axis of rotation (O), and the functional unit (302) is connected to the arm (304) such that the functional unit (302) is mounted to the linear drive (100, 300, 400, 500, 600, 700, 800, 900, 1000, 1200, 1300, 1414) laterally offset to the axis of rotation (O).

13. Microscope (1400), comprising the functional unit (302) and the linear drive (100, 300, 400, 500, 600, 700, 800, 900, 1000, 1200, 1300, 1414) according to any one of the preceding claims, wherein the linear drive (100, 300, 400, 500, 600, 700, 800, 900, 1000, 1200, 1300, 1414) is configured to move the functional unit (302).

14. The microscope (1400) according to claim 13, wherein the functional unit (302) is a microscope stage configured to receive a sample (1402) or a nosepiece of the microscope (1400) comprising at least one microscope objective (1412a, 1412b, 1412c).

# FIG. 1

100

F

104

108

108

114a    114b    114c

110a    110b    110c

112a    112b    112c

106    106

0    102

FIG. 2

# FIG. 3

FIG. 4

FIG. 5

# FIG. 6

FIG. 7

700

302

304    104

110a    110c

110b    102    106

706

106    704

708    402

702

306

FIG. 8

FIG. 9

FIG. 10

# FIG. 11

1100

1106a

1102

110

a)

1100

1106b

1102

110

b)

1100

1106c

1102

110

c)

1100

1110

1108

1104

110

d)

FIG. 12

FIG. 13

EP 4 459 348 A1

# FIG. 14

1400

1416

1402
1404

1412a
1412c
302
1410

1408
0'

1406

1412b
1414
104
102
402

1422
1418

1420

Europäisches
Patentamt

European
Patent Office

Office européen
des brevets

# EUROPEAN SEARCH REPORT

Application Number

EP 23 17 1056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GOOD I ET AL: "Expanding the Design Space for Electrically-Driven Soft Robots Through Handed Shearing Auxetics", 2022 INTERNATIONAL CONFERENCE ON ROBOTICS AND AUTOMATION (ICRA), IEEE, 23 May 2022 (2022-05-23), pages 10951-10957, XP034146754, DOI: 10.1109/ICRA46639.2022.9812156 [retrieved on 2022-07-12] | 1-5,8, 11,12 | INV. G02B7/00 G02B21/00 ADD. G01N21/64 |
| Y | * page 10951, right-hand column, line 14 – page 10952, left-hand column, line 4 * | 7,13,14 | |
| A | * figure 1A * | 6,9,10 | |
| X | CHIN L ET AL: "Compliant electric actuators based on handed shearing auxetics", 2018 IEEE INTERNATIONAL CONFERENCE ON SOFT ROBOTICS (ROBOSOFT), IEEE, 24 April 2018 (2018-04-24), pages 100-107, XP033371412, DOI: 10.1109/ROBOSOFT.2018.8404904 [retrieved on 2018-07-05] | 1-4,6-8, 11 | |
| Y | * abstract * | 13,14 | TECHNICAL FIELDS SEARCHED (IPC) |
| A | * figure 2B * | 5,9,10, 12 | G02B G01N |
| Y | US 2020/239774 A1 (GLEESON HELEN FRANCES [GB] ET AL) 30 July 2020 (2020-07-30) * claims 1-3 * | 7,13,14 | |
| A | US 2018/275385 A1 (HONDA MASATOSHI [JP]) 27 September 2018 (2018-09-27) * the whole document * | 1-14 | |

The present search report has been drawn up for all claims

| Place of search | Date of completion of the search | Examiner |
|---|---|---|
| Munich | 26 September 2023 | Witte, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 1056

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2023

| Patent document cited in search report | | Publication date | Patent family member(s) | | Publication date |
|---|---|---|---|---|---|
| US 2020239774 | A1 | 30-07-2020 | CN | 111247229 A | 05-06-2020 |
| | | | EP | 3697867 A1 | 26-08-2020 |
| | | | JP | 2021500435 A | 07-01-2021 |
| | | | KR | 20200071735 A | 19-06-2020 |
| | | | US | 2020239774 A1 | 30-07-2020 |
| | | | US | 2022204849 A1 | 30-06-2022 |
| | | | WO | 2019077361 A1 | 25-04-2019 |
| US 2018275385 | A1 | 27-09-2018 | CN | 108663791 A | 16-10-2018 |
| | | | EP | 3381399 A1 | 03-10-2018 |
| | | | JP | 6538915 B2 | 03-07-2019 |
| | | | JP | 2018161478 A | 18-10-2018 |
| | | | US | 2018275385 A1 | 27-09-2018 |

EPO FORM P0459

For more details about this annex : see Official Journal of the European Patent Office, No. 12/82